# EUROPÄISCHE PATENTANMELDUNG

(11) **EP 2 806 440 A1**
(43) Veröffentlichungstag der Anmeldung: **26.11.2014**
(21) Anmeldenummer: 14169725.0
(22) Anmeldetag: 23.05.2014
(51) Int. Cl.: H01G 9/20, H01L 31/02, H01L 31/048

(54) **Verbindbares Farbstoffsolarmodul, Array aus verbindbaren Farbstoffsolarmodulen und Verfahren zur Herstellung des Arrays**

(30) Priorität: 24.05.2013 DE 102013209710
(71) Anmelder: Fraunhofer-Gesellschaft zur Förderung der angewandten Forschung e.V., 80686 München (DE)
(72) Erfinder: Hinsch, Andreas, 79254 Oberried (DE); Götz, Harry, 77963 Schwanau Witten (DE); Gerland, Armin, 79685 Häg Ehrsberg (DE)
(74) Vertreter: Pfenning, Meinig & Partner GbR

(57) **Zusammenfassung**

Es wird ein verbindbares Farbstoffsolarmodul bereitgestellt, das sich durch einen gegenüber dem Stand der Technik verbesserten Schutz vor Umwelteinflüssen auszeichnet. Dieser Vorteil wird durch eine neuartige, verbesserte Isolierung empfindlicher Bauteile des Farbstoffsolarmoduls erreicht. Die verbindbaren Farbstoffsolarmodule sind zu einem Array mechanisch und elektrisch zusammensteckbar. Der Array zeichnet sich ebenfalls durch einen verbesserten Schutz gegenüber Umwelteinflüssen aus. Desweiteren wird ein Verfahren zur Herstellung eines Arrays aus verbindbaren Farbstoffsolarmodulen vorgeschlagen. Das erfindungsgemäße Array kann beispielsweise auf Gebäudedächern, Gebäudewänden, Fahrzeugdächern und/oder Fahrzeugwänden zur Energiegewinnung eingesetzt werden.

## Beschreibung

Es wird ein verbindbares Farbstoffsolarmodul bereitgestellt, das sich durch einen gegenüber dem Stand der Technik verbesserten Schutz vor Umwelteinflüssen auszeichnet. Dieser Vorteil wird durch eine neuartige, verbesserte Isolierung empfindlicher Bauteile des Farbstoffsolarmoduls erreicht. Die verbindbaren Farbstoffsolarmodule sind zu einem Array mechanisch und elektrisch zusammensteckbar. Der Array zeichnet sich ebenfalls durch einen verbesserten Schutz gegenüber Umwelteinflüssen aus. Desweiteren wird ein Verfahren zur Herstellung eines Arrays aus verbindbaren Farbstoffsolarmodulen vorgeschlagen. Das erfindungsgemäße Array kann beispielsweise auf Gebäudedächern, Gebäudewänden, Fahrzeugdächern und/oder Fahrzeugwänden zur Energiegewinnung eingesetzt werden.

Anders als bei herkömmlichen Solarzellen wandelt bei Farbstoffsolarzellen ein organischer Farbstoff Licht in elektrische Energie um. Farbstoffsolarmodule enthalten in ihrem Inneren als Funktionswerkstoffe organischen Farbstoff und Elektrolyt, wobei diese Funktionswerkstoffe empfindlich auf Umwelteinflüsse wie Wasser und Sauerstoff reagieren d.h. gegenüber Umwelteinflüssen geschützt werden müssen. Im Stand der Technik werden diese Funktionswerkstoffe über Befüllungslöcher in das Gerüst der Farbstoffsolarmodule gefüllt. Diese Befüllungslöcher werden nach dem Befüllen verschlossen und abgedichtet. Gleichzeitig ist es erforderlich, Anschlusskabel, die vom Inneren der Farbstoffsolarzellen nach außen führen, vor Umwelteinflüssen zu schützen.

Bei heutigen Lösungen sind die abgedichteten Befüllungslöcher und die Anschlusskabel eine Schwachstelle der Farbstoffsolarzellen, weil diese nur einen schwachen Schutz gegenüber Umwelteinflüssen bieten. Folglich wird die Langzeitfunktionalität der Farbstoffsolarzellen negativ beeinträchtigt und deren Lebenserwartung deutlich reduziert. Zudem weisen Farbstoffsolarzellen aus dem Stand der Technik an zwei ihrer Seiten elektrische Kontaktierungen auf, was die ungeschützte Angriffsfläche für Umwelteinflüsse nochmals vergrößert.

Ausgehend hiervon war es die Aufgabe der vorliegenden Erfindung ein Farbstoffsolarmodul bereitzustellen, das einen gegenüber bekannten Farbstoffsolarmodulen verbesserten Schutz gegenüber Umwelteinflüssen wie Sauerstoff und Wasser und somit eine längere Lebensdauer aufweist. Zudem war es Aufgabe, ein Array aus verbindbaren Farbstoffsolarmodulen und ein Verfahren zu deren reversiblen mechanischen und elektrischen Verbindung bereitzustellen.

Die Aufgabe wird gelöst durch das verbindbare Farbstoffsolarmodul gemäß Anspruch 1, das Array aus mindestens zwei Farbstoffsolarmodulen gemäß Anspruch 16, das Verfahren zur Herstellung eines Arrays aus verbindbaren Farbstoffsolarmodulen gemäß Anspruch 18 und die Verwendung des Farbstoffsolarmoduls bzw. des Arrays gemäß Anspruch 21. Die anhängigen Ansprüche zeigen vorteilhafte Ausgestaltungsformen auf.

Erfindungsgemäß wird ein verbindbares Farbstoffsolarmodul bereitgestellt, enthaltend
a) eine Oberseite, eine Unterseite und einer ersten, zweiten, dritten und vierten Seitenkante;
b) mindestens ein Hohlraumelement, wobei das Hohlraumelement an der ersten Seitenkante des Farbstoffsolarmoduls angeordnet ist und das Hohlraumelement die Oberseite und die Unterseite des Farbstoffsolarmoduls im Bereich der ersten Seitenkante kontaktiert; und
c) ein erstes und zweites elektrisches Kontaktelement, das mechanisch und elektrisch mit dem Farbstoffsolarmodul verbunden ist.

Das erfindungsgemäße Farbstoffsolarmodul ist dadurch gekennzeichnet, dass das erste elektrische Kontaktelement vollständig in dem Hohlraumelement angeordnet ist und das zweite elektrische Kontaktelement zumindest bereichsweise aus dem Hohlraumelement herausragt, so dass mehrere Farbstoffsolarmodule jeweils über Herstellen von Steckverbindungen zwischen den ersten und zweiten elektrischen Kontaktelementen mechanisch und elektrisch miteinander verbindbar sind.

Grundsätzlich ist es auch erfindungsgemäß, wenn das Farbstoffsolarmodul von der viereckigen Geometrie abweicht, d.h. z. B drei oder auch mehr als vier Seitenkanten aufweist.

Unter "im Bereich der ersten Seitenkante" ist ein Abstand von der Seitenkante von maximal 100 mm, insbesondere 10 bis 80 mm zu verstehen.

Da das erste elektrische Kontaktelement in dem Hohlraumelement angeordnet ist, ist dieses Kontaktelement gegenüber Umwelteinflüssen geschützt. Einem möglichen chemischen Angriff über Wasser und/oder Luftsauerstoff wird somit vorgebeugt. Das aus dem Hohlraumelement herausragende zweite elektrische Kontaktelement kann mit dem ersten Kontaktelement eines weiteren erfindungsgemäßen Farbstoffsolarmoduls über eine Steckverbindung mechanisch und elektrisch verbunden werden. Der Vorteil hierbei ist, dass sich somit zwischen den einzelnen Farbstoffsolarmodulen eine kostengünstige, sichere, einfache, schnelle und reversible Verbindung aufbauen lässt. Zudem ist nach der Verbindung der beiden Kontaktelemente auch das zweite elektrische Kontaktelement durch seine Anordnung in der Steckverbindung vor schädlichen Umwelteinflüssen geschützt.

Es ist besonders bevorzugt, wenn das Farbstoffsolarmodul halbleitende, photoaktive Perowskite der allgemeinen Form K-M-A₃ mit K = Kation, M = Metall und A = Anion enthält. Dabei ist es bevorzugt, dass
- K ausgewählt ist aus der Gruppe bestehend aus Cs⁺, CH₃NH₃⁺, Li⁺, Imidazoliumkationen, Ammoniumkationen, Pyridiniumkationen, Bipyridyle, Ca⁴⁺ und Mg²⁺, und/oder
- M ausgewählt ist aus der Gruppe bestehend aus Pb, Sn, Bi, Fe, Mn, Cu, Co, W, Ti und Zn, und/oder
- A ausgewählt ist aus der Gruppe bestehend aus , I⁻, F⁻, Br⁻, SCN⁻, BF4⁻, OTf, MnO⁴⁻, O²⁻ S²⁻ und SO₄²⁻

Ebenso sind Kombinationen oder Teilkomponenten hiervon bevorzugt.

Das verbindbare Farbstoffsolarmodul kann mindestens eine abgedichtete Öffnung zur Befüllung des Farbstoffsolarmoduls aufweisen. In einer bevorzugten Ausgestaltungsform ist die abgedichtete Öffnung in dem Hohlraumelement angeordnet. Der Vorteil hierbei ist, dass die abgedichtete Öffnung durch das Hohlraumelement umgeben ist und somit zusätzlich gegenüber mechanischen und chemischen Umwelteinflüssen geschützt ist.

Weiterhin vorteilhaft ist, dass das Hohlraumelement gasdicht isoliert ist.

Das erste und/oder zweite elektrischen Kontaktelement kann über mindestens ein elektrisches Verbindungselement, bevorzugt über ein elektrisches Kabel, mit dem Farbstoffsolarmodul verbunden sein. Diese Ausgestaltungsform kann eine erhöhte Flexibilität für die Positionierung der Farbstoffsolarmodule im Array bereitstellen.

Bevorzugt ist das mindestens eine elektrische Verbindungselement in dem Hohlraumelement angeordnet.

In einer weiteren bevorzugten Ausgestaltungsform weist das Farbstoffsolarmodul nur an der ersten Kante Anschlüsse für ein elektrisches Verbindungselement und/oder elektrisches Kontaktelement auf. Dadurch kann eine Isolierung der elektrischen Anschlüsse über eine Vorrichtung mit minimalen geometrischen Abmessungen erreicht werden. Daraus ergibt sich der Vorteil, dass in dem Array bei bestmöglichem Schutz der Anschlüsse eine maximale Fläche für die Photovoltaik zur Verfügung steht. Insbesondere können sich die anderen Kanten der Farbstoffsolarmodule in dem Array kontaktieren, was sich vorteilhaft auf die mechanische Stabilität des Arrays auswirkt.

Das Hohlraumelement kann mindestens ein Spannelement enthalten, bevorzugt eine Spannschraube, um den Kontakt des Hohlraumelements mit der Farbstoffsolarzelle zu verstärken d.h. eine Klemmverbindung herzustellen. Durch das Spannelement kann die Kontaktierung des Hohlraumelements mit dem Farbstoffsolarmodul verstärkt und/oder wieder gelöst werden, sodass sich eine Bindungsverstärkung bzw. Bindungslösung (Reversibilität der Bindung) ergibt. Die Reversibilität der Bindung kann insbesondere den Aufbau und Abbau des erfindungsgemäßen Arrays erleichtern.

In einer weiteren bevorzugten Ausgestaltungsform weist das Hohlraumelement ein Profil und/oder mindestens eine durchgängige Bohrung auf, wobei das Profil und/oder die Bohrung zur Verbindung des Hohlraumelements mit einer Besfestigungsvorrichtung, bevorzugt einem Fassadenelement, geeignet ist. In dieser Ausgestaltungsform fungiert das Hohlraumelement auch als Adapter zwischen den Farbstoffsolarmodulen und einer Befestigungsvorrichtung wie z.B. einem Fassadenelement. Vorteilhaft ist hieran, dass kein weiteres Verbindungselement benötigt wird, um das Farbstoffsolarmodul bzw. ein Array aus Farbstoffsolarmodulen, z.B. auf einem Häuserdach oder einer Häuserwand, zu installieren.

Das Hohlraumelement kann in seinem Inneren
a) mindestens ein elektronisches Bauteil, insbesondere einen Gleichrichter und/oder eine Junction-Box; und/oder
b) mindestens einen Speicher für elektrische Energie, insbesondere einen Lithium-Ionen-Akkumulator;
enthalten. Diese Ausgestaltungsform ist deshalb vorteilhaft, da die oben genannten elektronischen bzw. elektrischen Elemente somit gegenüber mechanischen und chemischen Einwirkungen der Umwelt geschützt werden.

Bevorzugt weist das erste elektrische Kontaktelement einen elektrisch leitfähigen Kupplungsstecker auf oder besteht daraus. Das zweite elektrische Kontaktelement kann einen elektrisch leitfähigen Kupplungsadapter enthalten oder daraus bestehen. Hierbei kann der Kupplungsstecker und Kupplungsadapter als Vater- und Mutterstück ausgestaltet sein. Der Vorteil ist hierbei, dass die elektrische Verbindung von benachbarten Farbstoffsolarmodulen über Kupplungsstecker und Kupplungsadapter eine zusätzliche mechanische Verstärkung bereitstellt.

Das Farbstoffsolarmodul kann an der Oberseite, Unterseite, ersten, zweiten, dritten und/oder vierten Seitenkante,
a) eine Glasschicht, bevorzugt eine UV-absorbierende Glasschicht;
b) eine Schutzfolie, bevorzugt eine UV-absorbierende Schutzfolie; und/oder
c) eine Kunststoffschicht, bevorzugt eine elastomere Kunststoffschicht,
enthalten. Hierdurch wird das Farbstoffsolarmodul mit einem mechanischen Schutz und einem Schutz vor schädlicher UV-Strahlung ausgerüstet, was wiederrum die Langzeitstabilität des Farbstoffsolarmoduls erhöht.

Das Modul kann auch als "Sandwich" hinter einer, bzw. zwischen zwei, Sicherheitsglasplatten (z.B. ESG) eingebettet werden und somit von der Außenwelt abgedichtet werden. Die Glasplatten können einen UV-Schutz aufweisen (z.B. UV-absorbierendes Glas, UV-Schutzfolle). Zusätzlich können diejenigen Glasstellen, die nicht innerhalb des Hohlraumelements liegen, in einem Rahmen, z.B. Formdichtung (Elastomer), eingeschlossen sein.

Das Farbstoffsolarmodul kann zudem einen mechanisch stabilen Rahmen aufweisen, welcher die erste, zweite, dritte und/oder vierte Seitenkante (Rahmen hat ein O-Profil) kontaktieren kann. Bevorzugt kontaktiert der Rahmen die zweite, dritte und/oder vierte Seitenkante (Rahmen hat ein U-Profil). Insbesondere kontaktiert der Rahmen zumindest bereichsweise die Oberseite und/oder Unterseite des Farbstoffsolarmoduls und ist bevorzugt an der Oberseite und/oder Unterseite des Farbstoffsolarmoduls befestigt, besonders bevorzugt ist er dort angeschraubt. Der Rahmen kann Metall und/oder eine Metalllegierung enthalten oder daraus bestehen und insbesondere als Blech ausgestaltet sein. Der Vorteil des Rahmens ist, dass das Farbstoffsolarmodul eine zusätzliche Formstabilität und mechanische Festigkeit erhält und somit unempfindlicher gegenüber mechanischen Umwelteinflüssen wird.

Weiterhin bevorzugt enthält das Farbstoffsolarmodul zumindest zwei verschiedene photovoltaisch -aktivierbare Stoffe, besonders bevorzugt zumindest zwei verschiedene, in dem Farbstoffsolarmodul räumlich voneinander getrennte, photovoltaisch aktivierbare Stoffe. Insbesondere weisen die photovoltaisch aktivierbaren Stoffe unterschiedliche Absorptionsmaxima auf. Besonders vorteilhaft ist die räumliche Trennung der photovoltaisch aktivierbaren Stoffe im Farbstoffsolarmodul in Richtung der einfallenden Strahlung (Sandwich-Aufbau), sodass auf einer definierten Fläche des Farbstoffsolarmoduls einfallendes Licht von mehreren verschiedenen photovoltaisch -aktivierten Stoffen stattfinden kann. Dadurch kann auf der definierten Fläche die Absorption eines maximalen Bereichs des einstrahlenden Spektrums erreicht werden, was die Effizienz der Farbstoffsolarzelle steigern kann.

Erfindungsgemäß wird zudem ein Array aus mindestens zwei erfindungsgemäßen Farbstoffsolarmodulen bereitgestellt, dadurch gekennzeichnet, dass jeweils das erste elektrisches Kontaktelement eines Farbstoffsolarmoduls mit dem zweiten elektrischen Kontaktelement eines benachbarten Farbstoffsolarmoduls über eine Steckverbindung mechanisch und elektrisch miteinander verbunden sind.

Hierbei können die Farbstoffsolarmodule seitlich miteinander verbunden sein, bevorzugt dergestalt, dass jeweils senkrecht zur ersten Seitenkante angeordnete Seitenkanten der Farbstoffsolarmodule einander zumindest bereichsweise kontaktieren.

In dem erfindungsgemäßen Array können vielmehr mindestens zwei verbindbare Farbstoffsolarmodule miteinander verbunden werden, die zueinander verschiedene photovoltaisch aktivierbare Stoffe enthalten.

Darüberhinaus wird ein Verfahren zur Herstellung eines Arrays aus verbindbaren Farbstoffsolarmodulen bereitgestellt, wobei jeweils ein Steckelement von einem verbindbaren Farbstoffzellenmodul mit einem Adapterelement eines weiteren verbindbaren Farbstoffzellenmoduls reversibel mechanisch und elektrisch miteinander verbunden wird.

Hierbei kann das Steckelement mit dem Adapterelement so verbunden werden, dass die Farbstoffsolarmodule seitlich miteinander verbunden werden, bevorzugt dergestalt, dass sich ihre Seitenkanten kontaktieren.

Bevorzugt werden in dem Verfahren erfindungsgemäße verbindbare Farbstoffsolarmodule miteinander verbunden.

Weiterhin wird die Verwendung des erfindungsgemäßen Farbstoffsolarmoduls und/oder des erfindungsgemäßen Arrays zur Energiegewinnung auf Gebäudedächern, Gebäudewänden, Fahrzeugdächern und/oder Fahrzeugwänden vorgeschlagen.

Anhand der nachfolgenden Figuren soll der erfindungsgemäße Gegenstand näher erläutert werden, ohne diesen auf die hier dargestellten spezifischen Ausgestaltungsformen einschränken zu wollen.

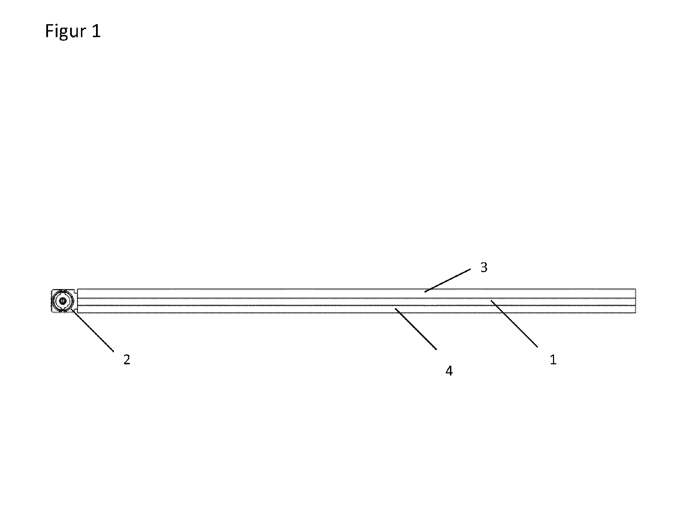

Figur 1 zeigt die seitliche Ansicht von einem Teil eines erfindungsgemäßen Farbstoffsolarmoduls. Die Frontelektrode 1 ist an der Oberseite von einem Deckglas 3 und an der Unterseite von einer Rückelektrode 4 umgeben. An einer Seite des Farbstoffmoduls befindet sich eine Anschlußbox 2.

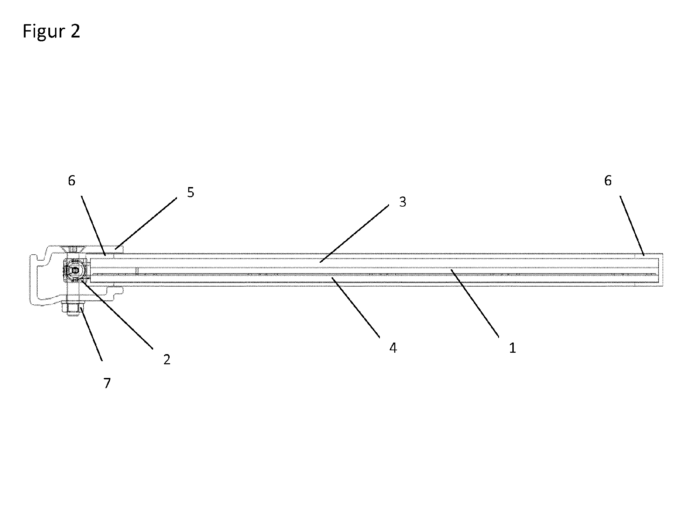

Figur 2 zeigt die seitliche Ansicht von einem Teil eines erfindungsgemäßen Farbstoffsolarmoduls, das von einem Blech 6 umrandet ist und dessen Anschlußbox 2 in einem Modulprofil 5 angeordnet ist. Das Modulprofil 5 kontaktiert die Farbstoffsolarzelle an der Blechumrandung 6 der Farbstoffsolarzelle im Bereich der Anschlußbox 2. Der Kontakt zwischen Modulprofil 5 und Farbstoffsolarzelle wird durch eine Spannschraube 7 verstärkt.

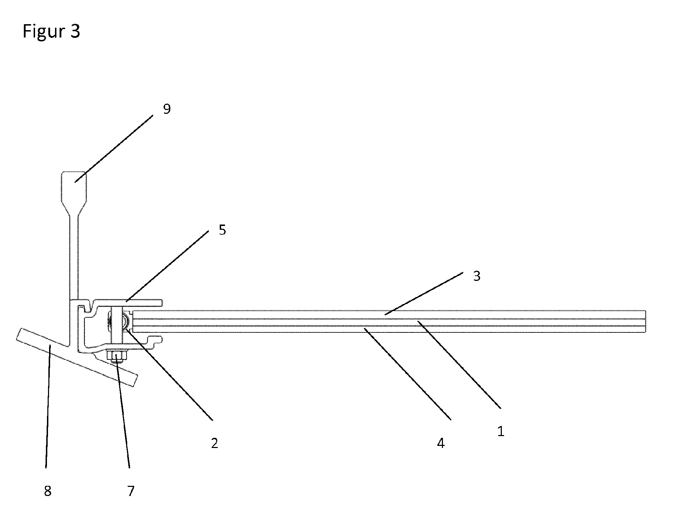

Figur 3 zeigt die seitliche Ansicht von einem Teil eines erfindungsgemäßen Farbstoffsolarmoduls, dessen Modulprofil 5 an einem Halteprofil 8 befestigt ist. Hier weist das Halteprofil 8 zudem ein Stützprofil 9 auf.

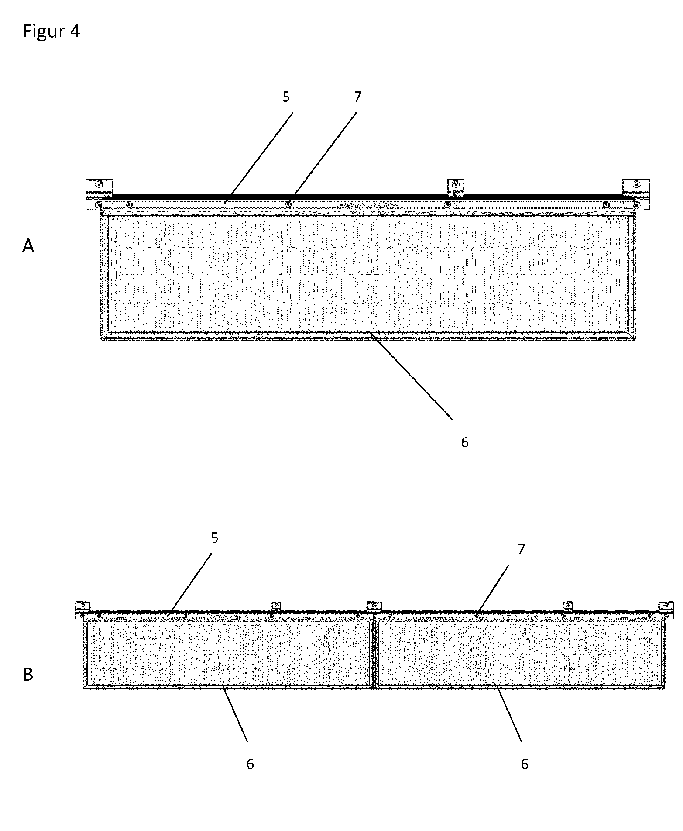

Figur 4 zeigt die Ansicht auf die Oberseite eines erfindungsgemäßen Farbstoffsolarmoduls (A) bzw. ein Array aus zwei seitlich zueinander angeordneten erfindungsgemäßen Farbstoffsolarmodulen (B).

## Patentansprüche

1. Verbindbares Farbstoffsolarmodul enthaltend
a) eine Oberseite, eine Unterseite und einer ersten, zweiten, dritten und vierten Seitenkante;
b) mindestens ein Hohlraumelement, wobei das Hohlraumelement an der ersten Seitenkante des Farbstoffsolarmoduls angeordnet ist und das Hohlraumelement die Oberseite und die Unterseite des Farbstoffsolarmoduls im Bereich der ersten Seitenkante kontaktiert; und
c) ein erstes und zweites elektrisches Kontaktelement, das mechanisch und elektrisch mit dem Farbstoffsolarmodul verbunden ist;
**dadurch gekennzeichnet, dass** das erste elektrische Kontaktelement vollständig in dem Hohlraumelement angeordnet ist und das zweite elektrische Kontaktelement zumindest bereichsweise aus dem Hohlraumelement herausragt, so dass mehrere Farbstoffsolarmodule jeweils über Herstellen von Steckverbindungen zwischen den ersten und zweiten elektrischen Kontaktelementen mechanisch und elektrisch miteinander verbindbar sind.

2. Verbindbares Farbstoffsolarmodul gemäß Anspruch 1, **dadurch gekennzeichnet, dass** das Farbstoffsolarmodul halbleitende, photoaktive Perowskite der allgemeinen Form K-M-A₃ mit K = Kation, M = Metall und A = Anion enthält.

3. Verbindbares Farbstoffmodul nach Anspruch 2, **dadurch gekennzeichnet, dass**
• K ausgewählt ist aus der Gruppe bestehend aus Cs⁺, CH₃NH₃⁺, Li⁺, Imidazoliumkationen, Ammoniumkationen, Pyridiniumkationen, Bipyridyle, Ca⁴⁺ und Mg²⁺, und/oder
• M ausgewählt ist aus der Gruppe bestehend aus Pb, Sn, Bi, Fe, Mn, Cu, Co, W, Ti und Zn, und/oder
• A ausgewählt ist aus der Gruppe bestehend aus, I⁻, F⁻, Br⁻, SCN⁻,BF₄⁻, OTf, MnO⁴⁻, O²⁻, S²⁻ und SO₄²⁻,
• sowie Kombinationen oder Teilkomponenten hiervon .

4. Verbindbares Farbstoffsolarmodul gemäß einem der vorhergehenden Ansprüche, **dadurch gekennzeichnet, dass** das Farbstoffsolarmodul mindestens eine abgedichtete Öffnung zur Befüllung des Farbstoffsolarmoduls enthält, wobei die abgedichtete Öffnung in dem Hohlraumelement angeordnet ist.

5. Verbindbares Farbstoffsolarmodul gemäß einem der vorhergehenden Ansprüche, **dadurch gekennzeichnet, dass** das Hohlraumelement gasdicht isoliert ist.

6. Verbindbares Farbstoffsolarmodul gemäß einem der vorhergehenden Ansprüche, **dadurch gekennzeichnet, dass** das erste und/oder zweite elektrischen Kontaktelement über mindestens ein elektrisches Verbindungselement, bevorzugt über ein elektrisches Kabel, mit dem Farbstoffsolarmodul verbunden ist.

7. Verbindbares Farbstoffsolarmodul gemäß Anspruch 6, **dadurch gekennzeichnet, dass** das mindestens eine elektrische Verbindungselement in dem Hohlraumelement angeordnet ist.

8. Verbindbares Farbstoffsolarmodul gemäß einem der vorhergehenden Ansprüche, **dadurch gekennzeichnet, dass** das Farbstoffsolarmodul nur an der ersten Kante Anschlüsse für ein elektrisches Verbindungselement und/oder elektrisches Kontaktelement aufweist.

9. Verbindbares Farbstoffsolarmodul gemäß einem der vorhergehenden Ansprüche, **dadurch gekennzeichnet, dass** das Hohlraumelement mindestens ein Spannelement enthält, bevorzugt eine Spannschraube, um den Kontakt des Hohlraumelements zur Farbstoffsolarzelle zu verstärken.

10. Verbindbares Farbstoffsolarmodul gemäß einem der vorhergehenden Ansprüche, **dadurch gekennzeichnet, dass** das Hohlraumelement ein Profil und/oder mindestens eine durchgängige Bohrung aufweist, wobei das Profil und/oder die Bohrung zur Verbindung des Hohlraumelements mit einer Befestigungsvorrichtung, bevorzugt einem Fassadenelement, geeignet ist.

11. Verbindbares Farbstoffsolarmodul gemäß einem der vorhergehenden Ansprüche, **dadurch gekennzeichnet, dass** das Hohlraumelement im Inneren des Hohlraumelements
a) mindestens ein elektronisches Bauteil, insbesondere einen Gleichrichter und/oder eine Junction-Box; und/oder
b) mindestens einen Speicher für elektrische Energie, insbesondere einen Lithium-Ionen-Akkumulator;
enthält.

12. Verbindbares Farbstoffsolarmodul gemäß einem der vorhergehenden Ansprüche, **dadurch gekennzeichnet, dass** das erste elektrische Kontaktelement einen elektrisch leitfähigen Kupplungsstecker aufweist oder daraus besteht und/oder das zweite elektrische Kontaktelement einen elektrisch leitfähigen Kupplungsadapter enthält oder daraus besteht.

13. Verbindbares Farbstoffsolarmodul gemäß einem der vorhergehenden Ansprüche, **dadurch gekennzeichnet, dass** das Farbstoffsolarmodul an der Oberseite, Unterseite, ersten, zweiten, dritten und/oder vierten Seitenkante,
a) eine Glasschicht, bevorzugt eine UV-absorbierende Glasschicht;
b) eine Schutzfolie, bevorzugt eine UV-absorbierende Schutzfolie; und/oder
c) eine Kunststoffschicht, bevorzugt eine elastomere Kunststoffschicht,
enthält.

14. Verbindbares Farbstoffsolarmodul gemäß einem der vorhergehenden Ansprüche, **dadurch gekennzeichnet, dass** das Farbstoffsolarmodul einen mechanisch stabilen Rahmen aufweist, der bevorzugt die zweite, dritte und/oder vierte Seitenkante kontaktiert und insbesondere zumindest bereichsweise an der Oberseite und/oder Unterseite befestigt, bevorzugt angeschraubt, ist.

15. Verbindbares Farbstoffsolarmodul gemäß einem der vorhergehenden Ansprüche, **dadurch gekennzeichnet, dass** das Farbstoffsolarmodul zumindest zwei verschiedene photovoltaisch aktivierbare Stoffe enthält, insbesondere zumindest zwei verschiedene, in dem Farbstoffsolarmodul räumlich voneinander getrennte, photovoltaisch aktivierbare Stoffe.

16. Array aus mindestens zwei Farbstoffsolarmodulen gemäß einem der vorhergehenden Ansprüche, **dadurch gekennzeichnet, dass** jeweils das erste elektrisches Kontaktelement eines Farbstoffsolarmoduls mit dem zweiten elektrischen Kontaktelement eines benachbarten Farbstoffsolarmoduls über eine Steckverbindung mechanisch und elektrisch miteinander verbunden sind.

17. Array gemäß Anspruch 16, **dadurch gekennzeichnet, dass** die Farbstoffsolarmodule seitlich miteinander verbunden sind, bevorzugt dergestalt, dass jeweils senkrecht zur ersten Seitenkante angeordnete Seitenkanten der Farbstoffsolarmodule einander zumindest bereichsweise kontaktieren.

18. Verfahren zur Herstellung eines Arrays aus verbindbaren Farbstoffsolarmodulen, wobei jeweils ein Steckelement von einem verbindbaren Farbstoffzellenmodul mit einem Adapterelement eines weiteren verbindbaren Farbstoffzellenmoduls reversibel mechanisch und elektrisch miteinander verbunden wird.

19. Verfahren gemäß Anspruch 18, **dadurch gekennzeichnet, dass** das Steckelement mit dem Adapterelement so verbunden wird, dass die verbindbaren Farbstoffsolarmodule seitlich miteinander verbunden werden, bevorzugt dergestalt, dass sich ihre Seitenkanten kontaktieren.

20. Verfahren gemäß einem der Ansprüche 18 oder 19, **dadurch gekennzeichnet, dass** verbindbare Farbstoffsolarmodule gemäß einem der Ansprüche 1 bis 14 miteinander verbunden werden.

21. Verwendung des Farbstoffsolarmoduls gemäß einem der Ansprüche 1 bis 15 und/oder des Arrays gemäß einem der Ansprüche 16 oder 17 zur Energiegewinnung auf Gebäudedächern, Gebäudewänden, Fahrzeugdächern und/oder Fahrzeugwänden.
